# EUROPEAN PATENT APPLICATION

(11) **EP 1 256 883 A1**
(43) Date of publication of application: **13.11.2002**
(21) Application number: 01111445.1
(22) Date of filing: 10.05.2001
(51) Int. Cl.: G06F 17/30, G06F 17/60

(54) **Patent information system**

(71) Applicant: SIEMENS AKTIENGESELLSCHAFT, 80333 München (DE)
(72) Inventor: Frers, Gerold, 85560 Ebersberg (DE)

(57) **Abstract**

A method is set out for obtaining and classifying a document as well as routing the document to a select receiver. A document is obtained from a source and provided with a mask which has a plurality of classification terms. The classification may be based on legal or technical aspects of the document. Appropriate classification term(s) are selected and a second document is created comprising the old document with the selected terms. The second document may be stored locally and distributed to selected endusers. The endusers are then presented with several options including forwarding it to other endusers, ordering a full text depending upon the document format, and adding comments.

## Description

### Brief Description of one Embodiment of the Present Invention

Some key words describing the invention include: Patent Information; electronic; paper based; distribution and search possibilities; specified preselection; in time delivery, world wide information, access from all sides, technical filter with address data, automatic ordering of full text.

### Deadline information connection and distribution

A selection and further distribution tool includes two data fields for the same content are received for selection. For enabling selection in the data field there are fields for pointing to the respective displayed name page (hauptplatt). By a mouse click, on the address boxes. User can assigned the document to a special group of users. These markings data are copied into a table and the content of the table is accordingly linked to a second received document by the selection the document can be treated without an election table. In the displayed document, there now exists a field for the mailing address and button for ordering the full text document. When ordering the full text the form will have possibilities for making comment and for defining an order to file an opposition is delivered. This form is sent back to the department in charge in an electronic file and will be integrated into the work process going on there.

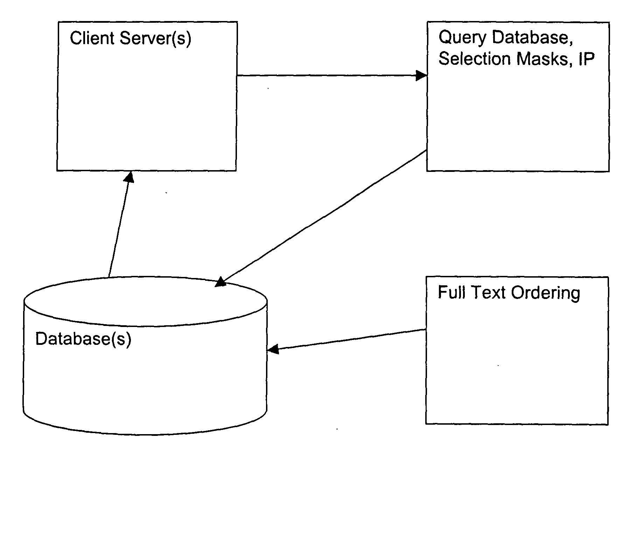

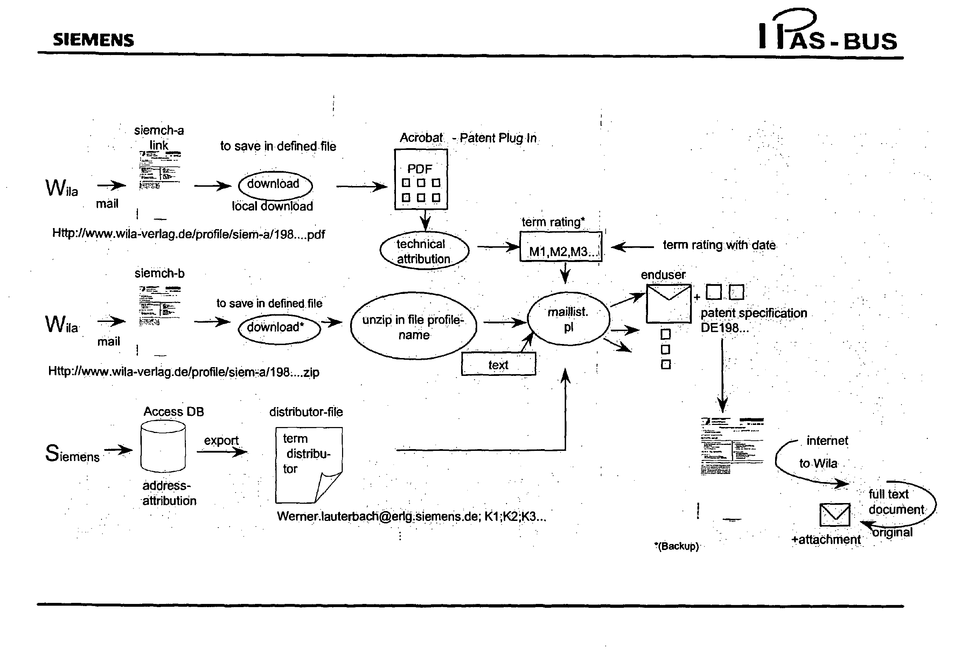

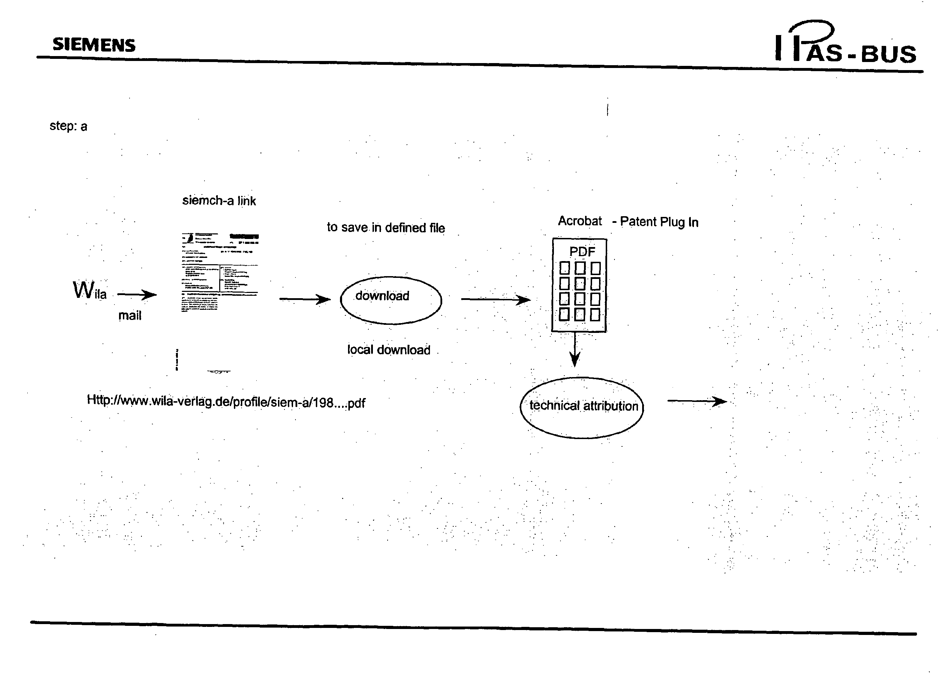

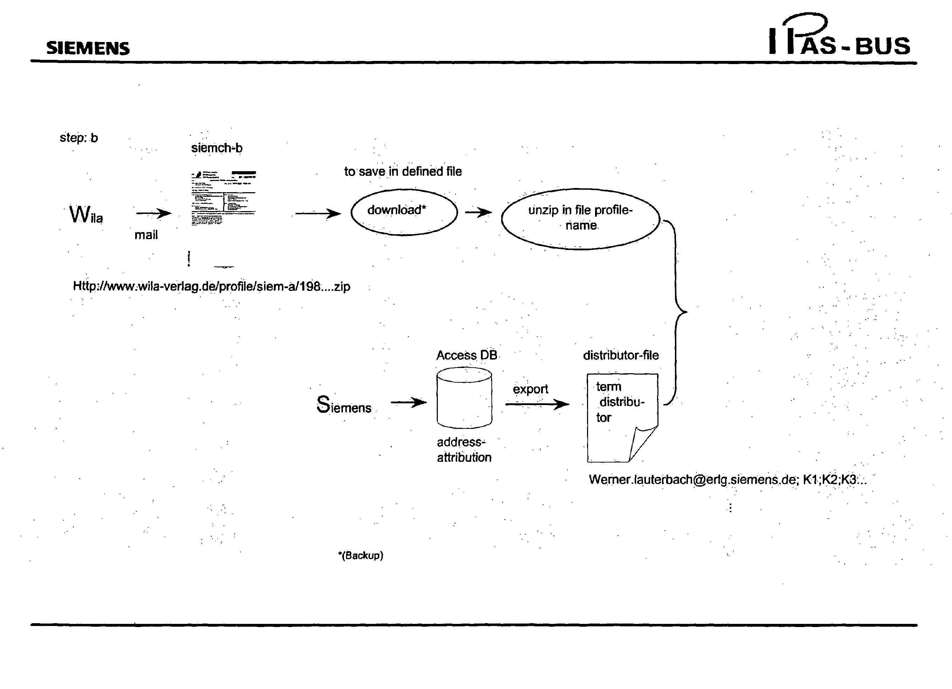

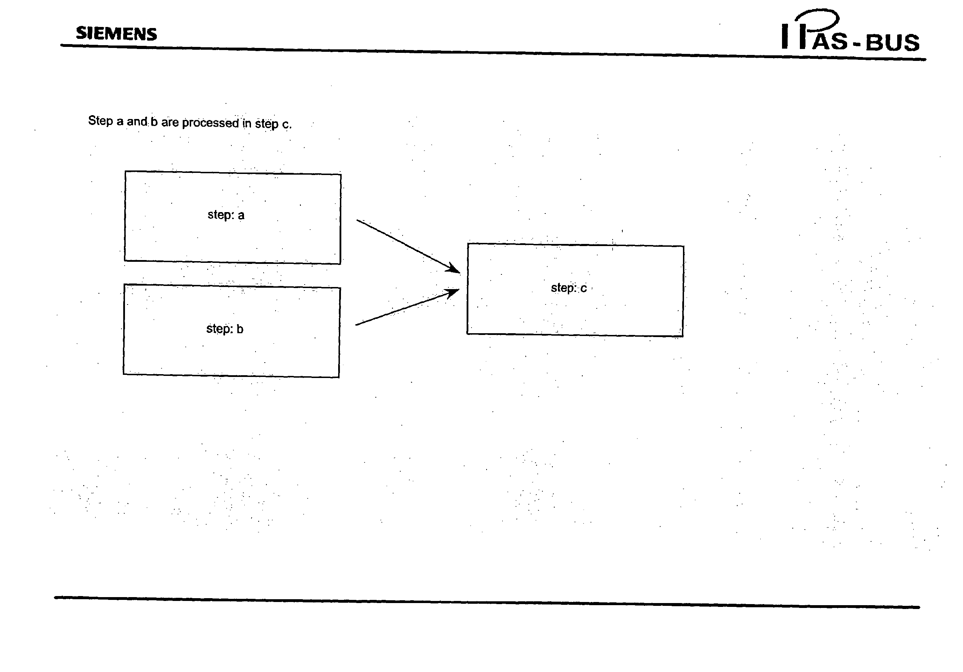

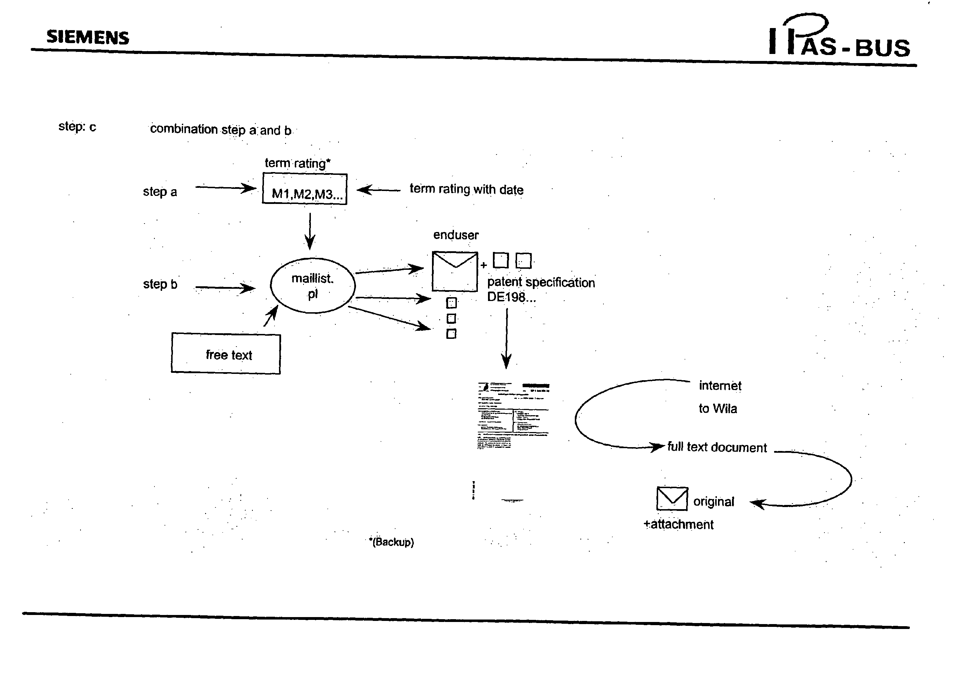

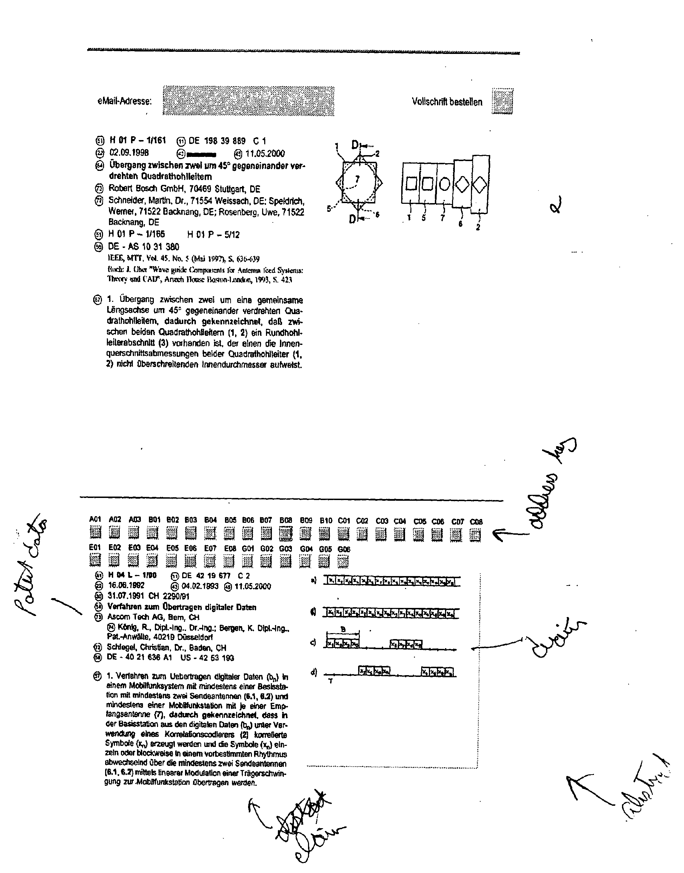

## Claims

1. A method of grouping information, comprising the steps of:
- downloading a first document;
- assigning a plurality of address keys to the document;
- presenting the first document and address keys to a user;
- receiving an input from the user, the input indicating at least one address key;
- creating a second document, the second document comprising the first document and input.

2. The method according to claim 1, further comprising the step of downloading the first document from a first database and storing the second document in the first database.

3. The method according to claims 1, further comprising the step of downloading the first document from a first database and storing the second document in a second database.

4. The method according to claims 1-3, wherein the address keys indicate information relating to the first document, the information including one of technical and legal classifications.

5. The method according to claims 1-4, wherein the first document is created from a patent.

6. The method according to claim 1-5, wherein the second document is in PDF format.

7. The method according to claims 1-6, wherein the first document is downloaded in zipped format, and further comprising the step of unzipping the first document.

8. The method according to claims 1-7, wherein the second document includes a figure from the first document.

9. The method according to claim 1-8, wherein the second document includes fields for: inputing data; routing the second document to a second user; and ordering additional information including a full text of the first document.
